# DEMANDE DE BREVET EUROPEEN

(11) **EP 2 783 978 A1**
(43) Date de publication de la demande: **01.10.2014**
(21) Numéro de dépôt: 14159641.1
(22) Date de dépôt: 13.03.2014
(51) Int. Cl.: B63J 2/04, B63J 2/08, B63J 2/12, B63B 13/00

(54) **Structure flottante munie d'une machine thermodynamique a rendement énergétique optimisé**

(30) Priorité: 26.03.2013 FR 1352737
(71) Demandeur: Déménitroux, Jacques, 69003 Lyon (FR); Daumesnil, Laurent, 39260 Montcusel (FR); Maillard, Gérald, 69002 Lyon (FR)
(72) Inventeur: Déménitroux, Jacques, 69003 Lyon (FR); Daumesnil, Laurent, 39260 Montcusel (FR); Maillard, Gérald, 69002 Lyon (FR)
(74) Mandataire: Guérin, Jean-Philippe

(57) **Abrégé**

L'invention concerne une structure flottante baignée dans une étendue d'eau (4) d'un lac, d'un cours d'eau ou d'une mer, comprenant :
-une pompe à chaleur (1) incluant :
-un échangeur évaporateur (3) ;
-un échangeur condenseur (130) ;
-un compresseur (150) et un détendeur (110) ;
-un circuit de fluide frigorigène (100) traversant l'échangeur évaporateur et l'échangeur condenseur, au moins un premier desdits échangeurs étant immergé dans ladite étendue d'eau.

## Description

L'invention concerne les structures flottantes, telles que des navires d'habitation ou de promenade ou des barges, et en particulier la génération de chaleur ou de froid pour de telles structures flottantes.

Les navires nécessitent dans un certain nombre de cas soit de générer de la chaleur en vue de réchauffer l'atmosphère ou de fournir de l'eau chaude sanitaire, soit du froid en vue de climatiser l'atmosphère ou de conserver des vivres dans des groupes frigorifiques. Le plus souvent, la chaleur est générée par combustion d'énergie fossile dans une chaudière. Le froid est généré par un groupe de climatisation alimenté électriquement par un groupe électrogène.

Les structures flottantes sont généralement mal isolées thermiquement. En outre, ces structures flottantes flottent en permanence dans l'eau d'un lac, d'un cours d'eau ou d'une mer. Par conséquent, les échanges thermiques entre l'intérieur de la structure et l'eau dans laquelle elle est baignée sont particulièrement élevés.

Le coût de la génération de froid ou de chaleur dans l'exploitation d'une structure flottante est par conséquent élevé et peut même s'avérer le principal poste de dépenses, en fonction de l'utilisation qui en est faite. Par conséquent, il existe un besoin pour une structure flottante présentant un meilleur rendement énergétique pour la génération de chaleur ou de froid, tout en restant suffisamment robuste et fiable pour une utilisation marine, et tout en restant utilisable à des températures atmosphériques très basses. Il existe également un besoin pour un navire pouvant être équipé en deuxième monte d'un système de génération de chaleur ou de froid optimisé.

L'invention porte ainsi sur une structure flottante visant à répondre à un ou plusieurs de ces besoins. L'invention porte ainsi sur une structure flottante telle que définie dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une illustration schématique d'une installation de génération de calories pour une structure flottante selon un exemple de mise en oeuvre de l'invention ;
- les figures 2 et 3 illustrent deux modes de fonctionnement de l'installation de la figure 1 ;
- la figure 4 est une vue en coupe schématique de la coque d'une structure flottante selon un premier mode de réalisation de l'invention ;
- la figure 5 est une vue en coupe schématique d'un échangeur dans une première variante du premier mode de réalisation ;
- la figure 6 est une vue en coupe schématique d'un échangeur dans une deuxième variante du premier mode de réalisation ;
- la figure 7 est une vue en coupe schématique d'un échangeur dans une troisième variante du premier mode de réalisation
- la figure 8 est une vue en coupe schématique de la coque d'une structure flottante selon un deuxième mode de réalisation de l'invention ;
- la figure 9 est une vue de côté d'un exemple de mise en oeuvre de l'échangeur dans le deuxième mode de réalisation ;
- la figure 10 est une vue en coupe schématique de l'échangeur de la figure 9 ;
- la figure 11 est une vue en perspective schématique d'un échangeur pouvant être mis en oeuvre pour les différents modes de réalisation de l'invention.

L'invention propose d'intégrer une pompe à chaleur dans une structure flottante baignée dans une étendue d'eau telle qu'un lac, un cours d'eau ou une mer. Cette pompe à chaleur inclut un échangeur thermique évaporateur, un échangeur thermique condenseur, un compresseur et un détendeur. La pompe à chaleur inclut en outre un circuit de fluide frigorigène traversant l'échangeur évaporateur et l'échangeur condenseur. Au moins un de ces échangeurs est immergé dans l'étendue d'eau baignant la structure.

La maintenance d'une telle pompe à chaleur est particulièrement aisée, puisqu'il n'est pas nécessaire de réaliser un pompage de l'eau dans laquelle baigne la structure du fait de l'absence de circuit primaire. Il n'est ainsi pas nécessaire de réaliser un filtrage de l'eau dans laquelle baigne la structure. La pompe à chaleur peut être utilisée pour fournir des calories à la structure flottante même lorsque la température atmosphérique est très basse, l'eau de l'échangeur immergé se renouvelant pour éviter tout risque de formation de glace en mode de chauffage de la structure flottante.

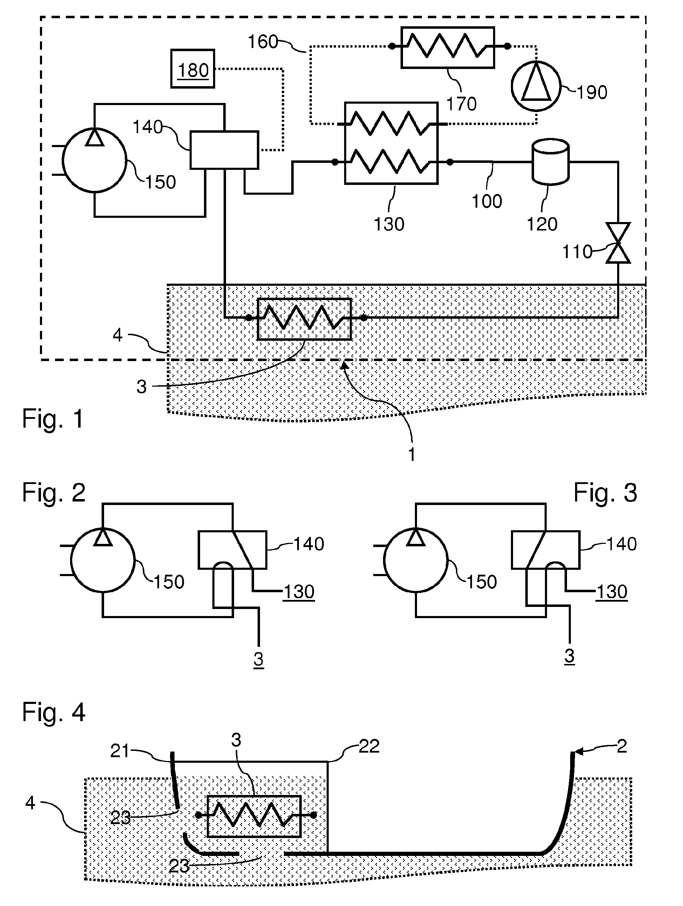

La figure 1 est une illustration schématique d'une pompe à chaleur 1 pour une structure flottante selon un exemple de mise en oeuvre de l'invention. La pompe à chaleur 1 comporte de façon connue en soi un circuit 100 contenant du fluide frigorigène, un premier échangeur 3, un deuxième échangeur 130 (typiquement un échangeur à plaques), un détendeur 110 et un compresseur 150 (par exemple un compresseur à piston ou un compresseur de type scroll). Le circuit de fluide frigorigène 100 traverse le premier échangeur 3, le deuxième échangeur 130, le détendeur 110 et le compresseur 150.

Le circuit 100 raccorde ainsi :
- une première entrée de l'échangeur 3 à une deuxième entrée du détendeur 110 ;
- une première entrée du détendeur 110 à une deuxième entrée d'un réservoir de liquide 120 ;
- une première entrée du réservoir de liquide 120 à une deuxième entrée de l'échangeur 130.

Dans l'exemple illustré, la pompe à chaleur 1 est avantageusement réversible afin de pouvoir générer sélectivement de la chaleur ou du froid à destination de la structure flottante. À cet effet, la pompe à chaleur 1 comporte une vanne à inversion de cycle 140, telle qu'une vanne trois voies. Le circuit 100 raccorde ainsi :
- une première entrée de l'échangeur 130 à un premier port de la vanne 140 ;
- un deuxième port de la vanne 140 à une deuxième entrée de l'échangeur 3 ;
- l'entrée et la sortie du compresseur 150 respectivement à des troisième et quatrième ports de la vanne 140.

Le mode de fonctionnement de la vanne 140 est commandé par un circuit de commande 180.

La structure flottante comporte en outre un circuit d'écoulement d'un fluide caloporteur secondaire 160 (par exemple eau ou eau glycolée). Ce circuit 160 est connecté d'une part à des troisième et quatrième entrées de l'échangeur 130, et d'autre part à des entrées d'un radiateur 170, par l'intermédiaire d'une pompe hydraulique 190. En fonction du mode de fonctionnement de la pompe à chaleur 1, le circuit secondaire 160 et le radiateur 170 permettront de dissiper de la chaleur ou de générer du froid dans la structure flottante.

L'échangeur 3 est immergé dans une étendue d'eau 4 dans laquelle la structure flottante est baignée. En fonction du mode de fonctionnement, soit l'évaporation, soit la condensation du cycle thermodynamique de la pompe à chaleur 1 est ainsi effectuée directement dans l'eau dans laquelle la structure flottante est baignée. On peut ainsi se dispenser de tout système de pompage de l'eau (et donc de tout système de filtrage de cette eau potentiellement sale) baignant la structure flottante, tout en bénéficiant de l'excellent coefficient de performance de la pompe à chaleur 1 basée sur un échangeur 3 liquide/fluide frigorigène. Un tel échangeur 3 nécessite ainsi une maintenance particulièrement réduite.

La figure 2 illustre le mode de fonctionnement dans lequel la pompe à chaleur 1 génère de la chaleur pour l'installation flottante. La vanne 140 raccorde alors l'entrée du compresseur 150 à la deuxième entrée de l'échangeur 3. La vanne 140 raccorde la première entrée de l'échangeur 130 à la sortie du compresseur 150. L'échangeur 3 fonctionne alors en évaporateur du fluide frigorigène du circuit 100 et l'échangeur 130 fonctionne alors en condenseur de ce fluide frigorigène. Le fluide frigorigène dans l'échangeur 3 absorbe alors des calories de l'eau présente dans cet échangeur pour les restituer au circuit secondaire 160 dans l'échangeur 130.

La figure 3 illustre le mode de fonctionnement dans lequel la pompe à chaleur 1 génère du froid pour l'installation flottante. La vanne 140 raccorde alors la sortie du compresseur 150 à la deuxième entrée de l'échangeur 3. La vanne 140 raccorde la première entrée de l'échangeur 130 à l'entrée du compresseur 150. L'échangeur 3 fonctionne alors en condenseur du fluide frigorigène du circuit 100 et l'échangeur 130 fonctionne alors en évaporateur de ce fluide frigorigène. Le fluide frigorigène dans l'échangeur 3 dissipe alors des calories dans l'eau présente dans cet échangeur après les avoir absorbées du circuit secondaire 160 dans l'échangeur 130.

La figure 4 est une vue en coupe schématique de la coque 21 d'une structure flottante 2 telle qu'un navire, pour illustrer un premier mode de réalisation de l'invention. Dans ce premier mode de réalisation, on loge l'échangeur 3 à l'intérieur de la coque 21. Ce premier mode de réalisation s'avère particulièrement avantageux pour une pompe à chaleur 1 de puissance ou pour une structure flottante 2 susceptible d'être fréquemment déplacée. Dans ce mode de réalisation, un réservoir 22 est ménagé à l'intérieur de la coque 21. La coque 21 comporte au moins une ouverture 23 sous sa ligne de flottaison. La coque 21 comporte ici plusieurs ouvertures 23 qui débouchent dans le réservoir 22, de façon à baigner le réservoir avec l'eau environnant la structure flottante 2 et à permettre un renouvellement de cette eau. L'échangeur 3 est immergé dans l'eau du réservoir 22. Le réservoir 22 peut être réalisé de façon étanche par rapport à l'intérieur de la coque 21. Dans ce mode de réalisation, l'échangeur 3 est protégé des chocs à l'intérieur de la coque 21, tout en étant en contact avec de l'eau se renouvelant par l'intermédiaire des ouvertures 23. L'échangeur 3 est avantageusement conçu pour être démontable, en vue de faciliter sa maintenance.

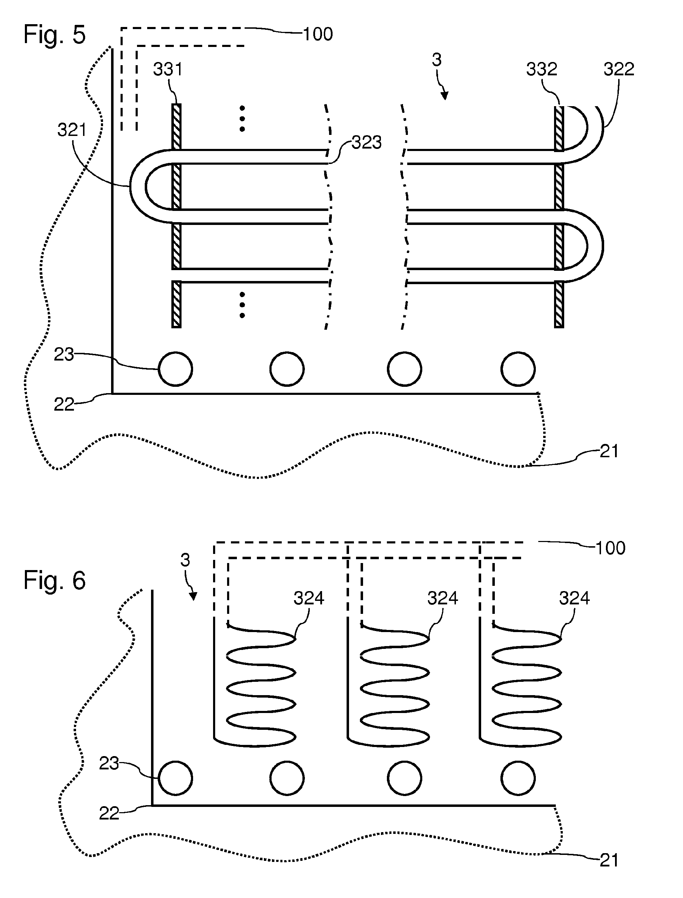

La figure 5 illustre une première variante d'échangeur 3 pour ce premier mode de réalisation. L'échangeur 3 est logé à l'intérieur du réservoir 22, ménagé à l'intérieur de la coque 21. Dans cette variante, la surface d'échange calorifique entre le fluide frigorigène traversant l'échangeur 3 et l'eau le baignant est formée pour l'essentiel par les parois d'une tubulure métallique d'écoulement du fluide frigorigène. L'échangeur comprend ainsi un ensemble de tubes métalliques 323 rectilignes, sensiblement parallèles et de même longueur. La première extrémité de chacun de ces tubes 323 est fixée à une première plaque métallique 331 (par exemple par soudure). La deuxième extrémité de chacun de ces tubes 323 est fixée à une deuxième plaque métallique 332 (par exemple par soudure). Les plaques métalliques 331 et 332 sont fixées de façon appropriée à la coque 21. Les tubes 323 s'étendent horizontalement et perpendiculairement aux plaques 331 et 332 entre lesquelles ils sont disposés. L'échangeur 3 comporte en outre des coudes 321 disposés en saillie par rapport à la plaque 331 et des coudes 322 sont disposés en saillie par rapport à la plaque 332. Les coudes 321 et 322 sont utilisés pour raccorder ensemble des tubes 323 adjacents (par exemple par soudure), de façon à former un circuit d'écoulement du fluide frigorigène dans l'échangeur 3. Les plaques métalliques 331 et 332 permettent à la fois d'assurer une tenue mécanique des tubes 323, et potentiellement d'assurer également un échange thermique avec les tubes 323 et l'eau présente dans le réservoir 22. Cette variante s'avère avantageuse pour réaliser des échangeurs 3 de différentes puissances avec un maximum de composants et d'étapes de fabrication communs. On peut ainsi modifier la puissance d'échange thermique de l'échangeur 3 en utilisant différentes longueurs de tubes 323 de même section, tout en conservant des plaques métalliques 331 et 332 et des coudes rapportés 321 et 322 identiques pour différentes puissances.

Pour simplifier la fabrication de l'échangeur 3 et limiter le nombre de soudures potentiellement à l'origine de fuites, on peut prévoir de former de façon monobloc deux tubes 323 adjacents et un coude les raccordant. Un tel élément monobloc peut par exemple être obtenu par pliage d'un tube de façon à lui donner une forme de U. Des coudes peuvent être rapportés par soudure au niveau de l'extrémité libre de la forme en U afin de raccorder ensemble plusieurs de ces éléments monobloc.

La figure 6 illustre une deuxième variante d'échangeur 3 pour ce premier mode de réalisation. L'échangeur 3 est logé à l'intérieur du réservoir 22, ménagé à l'intérieur de la coque 21. Dans cette variante, la surface d'échange calorifique entre le fluide frigorigène traversant l'échangeur 3 et l'eau le baignant est formée pour l'essentiel par les parois d'une tubulure métallique 324 en forme de serpentin enroulé autour d'un axe vertical.

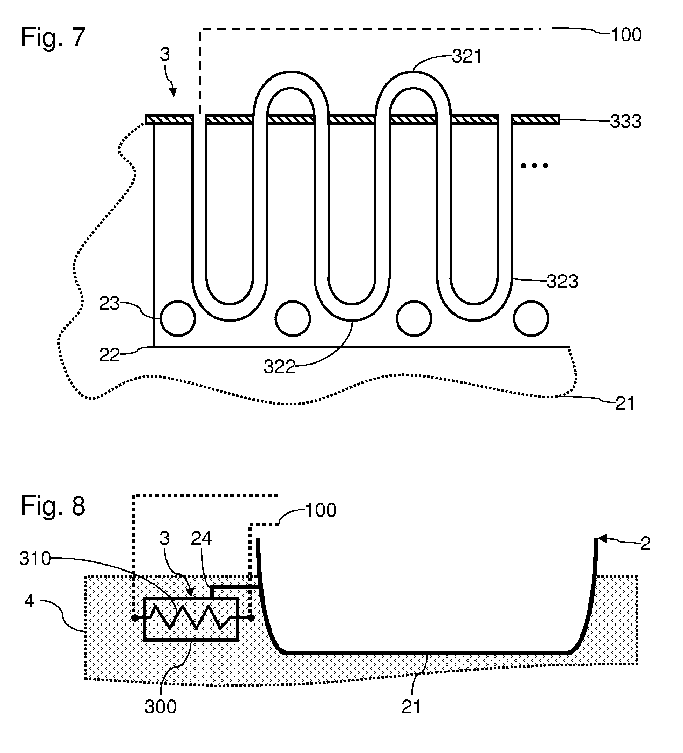

La figure 7 illustre une troisième variante échangeur 3 pour ce premier mode de réalisation. L'échangeur 3 est logé à l'intérieur du réservoir 22, ménagé à l'intérieur de la coque 21. Dans cette variante, la surface d'échange calorifique entre le fluide frigorigène traversant l'échangeur 3 et l'eau le baignant est formée pour l'essentiel par les parois de tubes métalliques 323 et de coudes 322 les raccordant dans leur partie basse. L'échangeur 3 comporte ainsi un ensemble de tubes métalliques 323 rectilignes, sensiblement parallèles et de même longueur. L'extrémité haute de chacun de ces tubes 323 est fixée à une plaque métallique 333. (Par exemple par soudure). Les tubes 323 s'étendent sensiblement perpendiculairement à la plaque 333, selon une orientation verticale. La plaque 333 est fixée de façon appropriée à la coque 21. Des coudes 321 sont disposés en saillie par rapport à la plaque 331 et sont utilisés pour raccorder ensemble des tubes 323. Cette variante s'avère particulièrement compacte et aisée à fixer à la coque 21. Une telle variante peut s'avérer particulièrement appropriée pour une pompe à chaleur 1 de faible puissance, typiquement inférieures à 5kW.

La figure 8 est une vue en coupe schématique de la coque 21 d'une structure flottante 2 telle qu'un navire, pour illustrer un second mode de réalisation de l'invention. Dans ce deuxième mode de réalisation, on loge l'échangeur 3 à l'extérieur de la coque 21. Ce deuxième mode de réalisation s'avère particulièrement avantageux pour une pompe à chaleur 1 rapportée sur un navire déjà en service, dans lequel il s'avère très délicat d'aménager un réservoir intérieur, ou dans lequel une chaudière ou un circuit de climatisation est déjà présent. Ce deuxième mode de réalisation s'avère en outre particulièrement intéressant avec un navire d'habitation très sédentaire, en favorisant un échange thermique avec l'eau baignant la coque 21. L'échangeur 3 peut ainsi comprendre un châssis 300 fixé à l'extérieur de la coque 21 par l'intermédiaire d'un support 24. Des tubulures 310 sont logées à l'intérieur du châssis 300. L'échangeur 3 est disposé dans l'eau 4, sous la ligne de flottaison de la coque 21. L'échangeur 3 est avantageusement conçu pour être démontable.

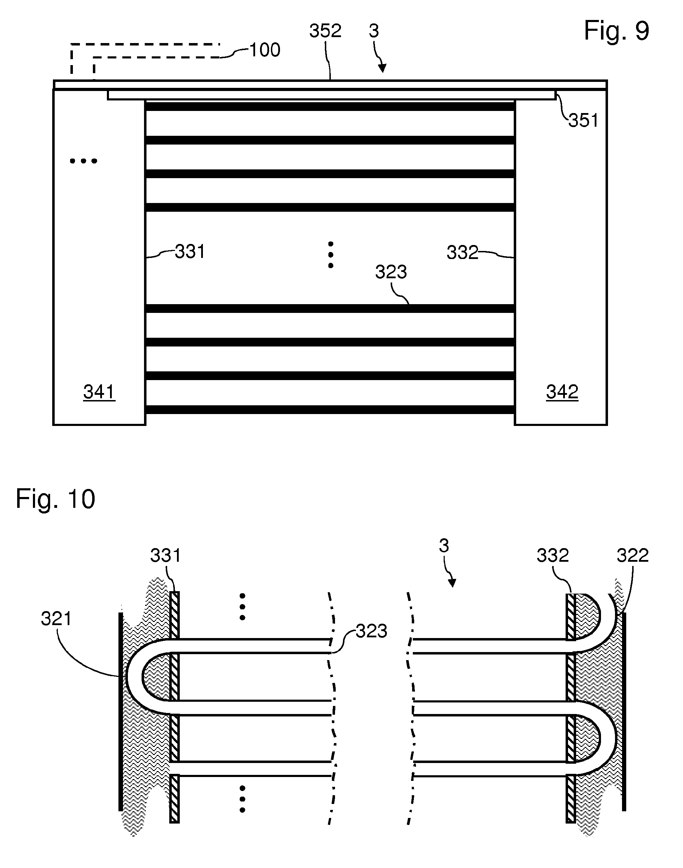

La figure 9 est une vue de côté d'une variante d'échangeur 3 selon ce deuxième mode de réalisation. L'échangeur comprend ainsi un ensemble de tubes métalliques 323 rectilignes, sensiblement parallèles et de même longueur. La première extrémité de chacun de ces tubes 323 est fixée à une première plaque métallique 331. La deuxième extrémité de chacun de ces tubes 323 est fixée à une deuxième plaque métallique 332. Les tubes 323 s'étendent horizontalement et perpendiculairement aux plaques 331 et 332 entre lesquelles ils sont disposés. L'échangeur 3 comporte en outre des coudes 321 disposés en saillie par rapport à la plaque 331 et des coudes 322 disposés en saillie par rapport à la plaque 332. Les coudes 321 et 322 sont utilisés pour raccorder ensemble des tubes 323 adjacents, de façon à former un circuit d'écoulement du fluide frigorigène dans l'échangeur 3. L'échangeur 3 comporte des enceintes étanches 341 et 342, par exemple réalisées avec des panneaux de tôle métallique. Les coudes 321 et 322 sont logés respectivement dans les enceintes 341 et 342, comme illustré à la figure 10. Les plaques 331 et 332 peuvent former des parois des enceintes étanches 341 et 342 respectivement, sur lesquelles les panneaux de tôle métallique sont soudés. On peut par exemple utiliser des panneaux d'acier inoxydable d'une épaisseur de 2mm pour les enceintes étanches 341 et 342.

Les enceintes étanches 341 et 342 permettent d'une part de protéger les coudes 321 et 322 contre les chocs, et d'autre part de confiner une éventuelle fuite de fluide frigorigène au niveau des coudes 321 et 322. Les enceintes étanches 341 et 342 sont avantageusement fixées ensemble par l'intermédiaire de longerons 351. Les longerons 351 peuvent être fixées à la coque 21, par exemple par l'intermédiaire d'une plaque métallique supérieure 352.

Afin de favoriser la détection d'éventuelles fuites de fluide frigorigène dans les enceintes 341 et 342, celles-ci peuvent inclure un gaz inerte à pression supérieure ou égale à la pression atmosphérique. Les enceintes 341 et 342 peuvent par exemple être remplies d'un gaz tel que de l'azote. Chacune des enceintes 341 et 342 peut alors inclure un capteur de pression afin de déterminer la présence d'une pression anormalement élevée, potentiellement synonyme de fuite.

Afin de limiter les risques de fuite et limiter les vibrations pouvant induire des fuites au niveau des coudes, les enceintes 341 et 342 peuvent également être remplies d'une mousse polymère dans laquelle les coudes 321 et 322 sont noyés. On peut par exemple prévoir de remplir les enceintes 341 et 342 avec de la mousse polyuréthane.

Les tubes 323 mentionnés auparavant peuvent par exemple être des tubes d'acier inoxydable (par exemple de l'acier inoxydable 404). On peut par exemple utiliser des tubes d'acier inoxydable d'un diamètre extérieur de 13,7mm avec une épaisseur de paroi de 1,6mm. Les coudes 321 et 322 rapportés peuvent par exemple être réalisés soit en acier inoxydable, soit en cuivre brasé. Les coudes 321 et 322 rapportés présentent par exemple le même diamètre intérieur que les tubes 323 et une même épaisseur de paroi.

Le fluide frigorigène du circuit 100 peut par exemple être du dioxyde de carbone, du 407C ou du 410A. Un compresseur 150 sera sélectionné en conséquence.

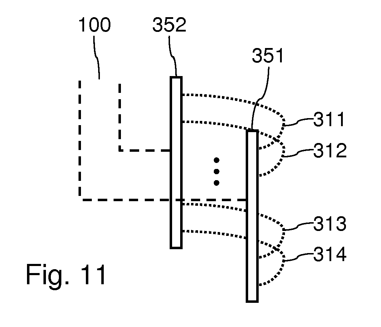

La figure 11 est une vue schématique en perspective d'un exemple d'échangeur 3 visant à limiter les pertes de charge avec une pompe à chaleur 1 de puissance. Afin de limiter les pertes de charge, l'échangeur 3 comporte plusieurs tubulures 311, 312, 313 et 314 d'écoulement du fluide frigorigène connectées en parallèle entre les première et deuxième entrées de l'échangeur 3. Les tubulures 311, 312, 313 et 314 sont ici représentées de façon très schématique mais peuvent chacune inclure plusieurs tubes 323 raccordés en série. Un distributeur 351 forme une première entrée de l'échangeur 3 connectée au circuit 100. Le distributeur 351 vise à homogénéiser la pression d'entrée au niveau des tubulures 311, 312, 313 et 314 qui lui sont connectées. Un collecteur 352 forme une deuxième entrée de l'échangeur 3 connectée au circuit 100. Le collecteur 352 vise à assurer une récupération optimale du fluide frigorigène provenant des tubulures 311, 312, 313 et 314 qui lui sont connectées. Du fait de la présence des tubulures 311, 312, 313 et 314 en parallèle, une importante puissance thermique peut être échangée dans l'échangeur 3 tout en conservant des pertes de charge du fluide frigorigène réduites dans cet échangeur 3.

L'échangeur 3 est avantageusement muni d'une électrode de protection contre la corrosion, par exemple en magnésium pour de l'eau douce, et par exemple en zinc/magnésium pour de l'eau salée.

Dans les exemples détaillés auparavant, la pompe à chaleur 1 est montée sur une structure flottante baignée dans une étendue d'eau. Cependant, selon un autre aspect indépendant de l'invention, une pompe à chaleur similaire peut être montée sur une structure terrienne. L'échangeur 3, traversé par le circuit de fluide frigorigène, est alors immergé dans une étendue d'eau d'un lac, d'un cours d'eau ou d'une mer, étendue d'eau disposée à proximité de la structure terrienne. L'autre échangeur est par exemple monté à l'intérieur de la structure terrienne, ou monté de façon à échanger de la chaleur avec l'intérieur de la structure terrienne. L'échangeur 3 d'une telle structure terrienne peut reprendre les caractéristiques techniques des différents échangeurs décrits précédemment.

## Revendications

1. Structure flottante baignée dans une étendue d'eau (4) d'un lac, d'un cours d'eau ou d'une mer, structure **caractérisée en ce qu'**elle comprend :
- une pompe à chaleur (1) incluant :
- un échangeur évaporateur (3) ;
- un échangeur condenseur (130) ;
- un compresseur (150) et un détendeur (110) ;
- un circuit de fluide frigorigène (100) traversant l'échangeur évaporateur et l'échangeur condenseur, au moins un premier desdits échangeurs étant immergé dans ladite étendue d'eau.

2. Structure flottante (2) selon la revendication 1, dans laquelle la pompe à chaleur (1) est configurée pour utiliser ledit premier échangeur (3) comme échangeur évaporateur.

3. Structure flottante (2) selon la revendication 1 ou 2, dans laquelle ledit premier échangeur (3) comprend plusieurs tubulures d'écoulement du fluide frigorigène connectées en parallèle entre une entrée et une sortie de ce premier échangeur.

4. Structure flottante (2) (2) selon l'une quelconque des revendications précédentes, comprenant :
- une coque (21) comportant au moins une ouverture (23) sous sa ligne de flottaison, et
- un réservoir (22) ménagé à l'intérieur de la coque (21) et dans lequel débouche ladite ouverture pour baigner le réservoir avec l'eau de ladite étendue d'eau, le premier échangeur (3) étant immergé dans l'eau du réservoir (22).

5. Structure flottante (2) selon l'une quelconque des revendications 1 à 3, comprenant une coque (21), ledit premier échangeur étant disposé à l'extérieur de la coque sous sa ligne de flottaison.

6. Structure flottante (2) selon l'une quelconque des revendications précédentes, dans lequel ledit premier échangeur (3) comprend :
- des première et deuxième plaques métalliques (331,332) ;
- un ensemble de tubes métalliques (323) d'écoulement du fluide frigorigène, chacun desdits tubes comportant une première extrémité fixée à la première plaque métallique et une deuxième extrémité fixée à la deuxième plaque métallique, chacun desdits tubes étant raccordé à un autre desdits tubes par l'intermédiaire d'un coude métallique (321,322) en saillie par rapport à une desdites plaques métalliques.

7. Structure flottante (2) selon les revendications 5 et 6, comportant en outre des première et deuxième enceintes étanches (341,342) disposées au niveau des première et deuxième plaques métalliques respectivement, des coudes reliant des premières extrémités desdits tubes étant logés dans la première enceinte étanche, des coudes reliant des deuxièmes extrémités desdits tubes étant logés dans la deuxième enceinte étanche.

8. Structure flottante (2) selon la revendication 7, dans lequel lesdites première et deuxième enceintes étanches incluent un gaz inerte à une pression supérieure ou égale à la pression atmosphérique, chacune desdites première et deuxième enceintes comportant un capteur de pression.

9. Structure flottante (2) selon la revendication 7, dans lequel lesdites première et deuxième enceintes étanches incluent une mousse polymère dans laquelle lesdits coudes sont noyés.

10. Structure flottante (2) selon l'une quelconque des revendications 6 à 9, dans laquelle deux desdits tubes et un desdits coudes sont formés d'un seul tenant.
